(19) Europäisches Patentamt
European Patent Office
Office européen des brevets

(11) Numéro de publication: **0 430 126 B1**

(12) **FASCICULE DE BREVET EUROPEEN**

(45) Date de publication de fascicule du brevet: **03.08.94**   (51) Int. Cl.5: **H04L 1/16**

(21) Numéro de dépôt: **90122521.9**

(22) Date de dépôt: **26.11.90**

(54) **Procédé et dispositif de transmission numérique d'informations, avec demande automatique de retransmission, ou "ARO".**

(30) Priorité: **28.11.89 FR 8915630**

(43) Date de publication de la demande:
**05.06.91 Bulletin 91/23**

(45) Mention de la délivrance du brevet:
**03.08.94 Bulletin 94/31**

(84) Etats contractants désignés:
**CH DE ES FR GB IT LI NL SE**

(56) Documents cités:
**EP-A- 0 046 831
US-A- 3 878 333
US-A- 4 589 111**

**IEEE COMMUNICATIONS MAGAZINE, vol. 22, no. 12, décembre 1984, pages 5-17, IEEE, New York, US; S. LIN et al.: "Automatic repeat request error control schemes"**

(73) Titulaire: **ALCATEL TELSPACE
5, rue Noel Pons
F-92734 Nanterre Cédex(FR)**

(72) Inventeur: **Darmon, Marc
21, rue Barbet de Jouy
F-75007 Paris(FR)**
Inventeur: **Pontif, Marc
44, rue de Medan
F-78670 Villennes Sur Seine(FR)**
Inventeur: **Sadot, Philippe
5, Passage Bullourde
F-75011 Paris(FR)**

(74) Mandataire: **Weinmiller, Jürgen et al
Lennéstrasse 9
Postfach 24
D-82336 Feldafing (DE)**

**Description**

La présente invention se rapporte à un procédé et à un dispositif de transmission numérique d'informations, avec demande automatique de retransmission en cas de message mal reçu, ou "ARQ".

Trois solutions sont généralement utilisées pour diminuer le taux d'erreur d'une transmission numérique.

- La première consiste en un codage correcteur sans voie de retour (ce que les anglophones appellent "Forward Error Control" : FEC) Un défaut de cette stratégie de correction d'erreurs est sa faible adaptativité qui peut être gênante pour certains types de canaux (canal troposphérique ou canal brouillé) . En effet, par exemple pour le canal troposphérique, les différents paramètres du canal tels que le rapport signal à bruit moyen, la bande de cohérence ou le temps de cohérence ne sont fixes qu'à petite échelle. Si l'on observe ces paramètres pendant quelques heures, quelques jours ou quelques mois, on se rend compte qu'ils subissent des fluctuations non négligeables. Ainsi, un code conçu pour fonctionner idéalement avec des paramètres donnés, sera probablement inefficace à certains moments de la journée ou de l'année. Ce procédé a l'avantage d'assurer un retard de transmission fixe. Mais il est inefficace contre les paquets d'erreurs s'il n'est pas associé à un entrelacement dont l'inconvénient est d'augmenter le retard de transmission.
- Une seconde solution est d'utiliser l'existence d'une voie de retour, en utilisant la stratégie d'ARQ ("Automatic Repeat reQuest"), stratégie de détection d'erreurs et de retransmission. On peut définir cette stratégie de la façon suivante :
  . Les données sont envoyées en paquets, et non en continu ;
  . Chaque paquet contient les symboles d'informations accompagnés de symboles de contrôle ;
  . Le récepteur utilise les symboles de contrôle pour détecter d'éventuelles erreurs de transmission. Selon le cas il accepte le bloc ou en demande la retransmission. Ainsi la stratégie d'ARQ utilise un code détecteur d'erreurs alors que la stratégie FEC utilise un code correcteur. Un code détecteur d'erreurs demande généralement un décodage plus simple qu'un code correcteur.

Cette stratégie introduit une redondance supplémentaire qui est la retransmission. Mais si la redondance propre au codage est fixe (et mesurée par le taux de codage), la seconde est une variable aléatoire. La redondance moyenne totale est mesurée par le taux de codage effectif. Le principal inconvénient de cette solution est que lorsque les conditions de transmissions sont mauvaises (canal fortement bruité) le code détecteur est vite submergé et le nombre de retransmissions est très important ce qui fait augmenter le retard de transmission. Pour pallier ce problème, on utilise actuellement l'association de stratégie d'ARQ et de codage correcteur : c'est la troisième solution.

- La troisième solution est appelée stratégie "hybride" car elle combine codage correcteur et procédure d'ARQ. Le code utilisé ne sert plus simplement à détecter les erreurs mais aussi à les corriger dans la limite de ces capacités. La stratégie est alors la suivante :
  . On émet une séquence codée ;
  . Le récepteur dispose d'un décodeur qui tente de décoder la séquence reçue. On utilise un certain critère qui mesure la confiance que l'on peut avoir dans la décision du décodeur ;
  . Si ce critère est satisfait, on estime que la séquence décodée est bien celle qui a été émise, sinon le récepteur demande une retransmission.

Cette stratégie ARQ hybride a fait l'objet de quelques publications (voir, par exemple, "IEEE Communications Magazine", Décembre 1984, vol. 22, No. 12, pages 5-17) utilisant comme système de codage, des codes blocs ou des codes convolutifs décodés par l'algorithme de Viterbi. Toutefois l'utilisation de ces codes ne peut permettre d'obtenir un taux d'erreur arbitrairement petit en gardant fixe le taux de codage. Il est alors possible d'utiliser un code convolutif décodé par un algorithme de décodage séquentiel. Le plus adapté est sans doute l'algorithme de pile qui est le plus à même de fournir une indication de fiabilité du décodage.

L'un des inconvénients des méthodes ARQ utilisant la demande de retransmission (deuxième et troisième solutions précitées) est la croissance incessante du retard de transmission des informations, dû aux retransmissions successives, ce qui nécessite que l'émetteur possède des mémoires-tampon de très grande taille et que des informations soient perdues si ces mémoires débordent. Ce retard croissant empêche d'utiliser ces méthodes en particulier pour des communications téléphoniques.

Le document US-A-3 878 333 propose un système ARQ simplex où le nombre de caractères par bloc à transmettre (ou retransmettre, s'il y a eu une erreur) est variable, et dépend de la qualité de transmission (taux d'erreur). Cela permet de diminuer l'effet des retransmissions sur l'efficacité du système.

La présente invention vise à remédier à cet inconvénient, et elle propose dans ce but une solution qui, tout en utilisant une stratégie ARQ, hybride ou non, permet d'avoir un retard de transmission qui ne croisse pas indéfiniment. En effet ce retard est rattrapé lorsque les conditions de transmission sont suffisamment bonnes. Ce résultat est obtenu par un procédé de transmission numérique, avec demande automatique de retransmission (ou "ARQ") et codage détecteur ou correcteur d'erreur des blocs émis, avec émission d'une indication de fiabilité du décodage, ou "indication de confiance", la valeur de cette indication permettant de juger si le décodage est efficace ou non efficace, dans ce dernier cas une demande de retransmission ARQ ayant alors lieu, ce procédé consistant à prévoir, dans chaque trame à émettre, un emplacement supplémentaire suffisant pour en cas de retard, de valeur prédéterminée jugée excessive, dû aux retransmissions, procéder, pour résorber ce retard excessif, à l'émission simultanée de plusieurs blocs d'informations au lieu d'un seul, dans cette même trame, cette trame comportant de ce fait, et avant codage, au moins :

. le classique mot de verrouillage de trame MVT ;
. un bloc Commande qui comporte les renseignements nécessaires au protocole de retransmission, parmi lesquels figure une indication qui précise le nombre de blocs d'informations utiles alors émis simultanément dans cette trame : un seul bloc en cas de retard nul ou non excessif, deux blocs ou plus en cas de retard jugé excessif ;
. un bloc Information qui comporte entre autres les bits utiles d'information proprement dits, et dont la taille est suffisante pour pouvoir contenir, en cas de retard jugé excessif, au moins deux blocs d'informations utiles successifs qui seraient, en cas contraire, émis chacun dans une trame respective.

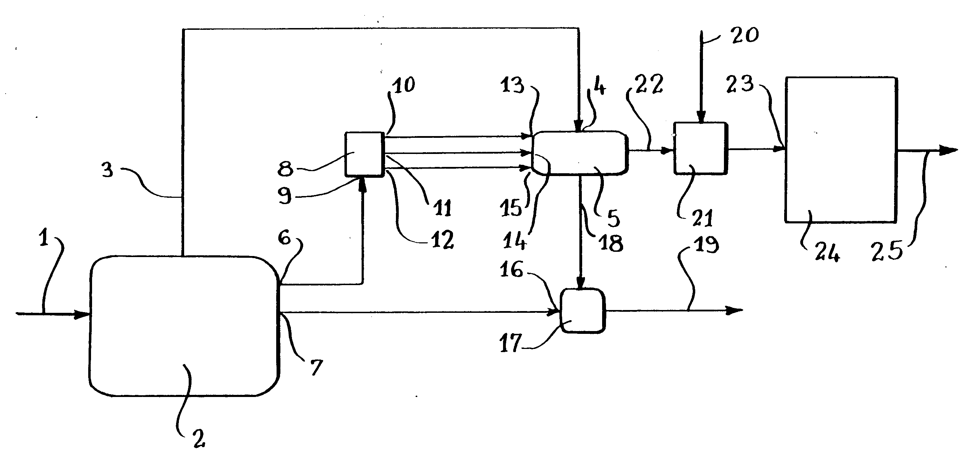

De toute façon, l'invention sera bien comprise, et ses avantages et autres caractéristiques ressortiront, lors de la description suivante d'un exemple non limitatif de réalisation, en référence à la figure unique annexée qui est un schéma synoptique d'un dispositif possible de mise en oeuvre de ce procédé.

En se référant à cette figure unique, il s'agit de la partie de traitement numérique du signal qui équipe un émetteur-récepteur d'installation téléphonique duplex.

Sur cette figure, la référence 1 désigne le fil d'arrivée du train numérique reçu, par voie hertzienne ou non, de la part de l'autre correspondant. Ce train numérique est codé par un code correcteur d'erreurs, et il est en conséquence appliqué à un décodeur-correcteur d'erreurs 2. Dans cet exemple préférentiel, il est utilisé un codage convolutif par exemple de taux 1/2 et de longueur de contrainte 35, et un décodage séquentiel utilisant l'algorithme de pile. Le décodeur 2 est donc un décodeur séquentiel, qui a l'avantage connu de pouvoir fournir aisément sur une de ses sorties 3 une information, indispensable pour la mise en oeuvre de la présente invention, de fiabilité du décodage, ou "indication de confiance" (il s'agit dans ce cas de l'indication de débordement ou de non-débordement de la pile) : selon la valeur de cette indication de confiance, ou bien le décodage sera jugé efficace et il n'y aura pas lieu de faire de demande de retransmission ARQ, ou bien ce même décodage sera jugé inefficace et il y aura alors lieu de faire une demande de retransmission ARQ.

Chaque trame reçue en 1 est donc une trame codée, le codage étant effectué dans l'installation, similaire à celle représentée sur ce dessin, de l'autre correspondant dont on reçoit le message en 1. Avant codage, la constitution de cette trame est la suivante :

| MVT | COM | INFO |
|-----|-----|------|

Elle comporte donc :
. Le très classique "Mot de Verrouillage de Trame" MVT qui est destiné à la synchronisation des paquets ; ce mot de verrouillage de trame n'est pas codé par le codeur séquentiel.
. Un bloc "Commande" COM, qui sera détaillé ci-après, et qui comporte tous les renseignements nécessaires au protocole de demande de retransmission ARQ, en particulier : accusé de réception positif ou négatif, numéro du premier (ou du seul) bloc émis dans la trame, nombre de blocs émis dans cette trame, numéro du bloc que l'on attend (ou que l'on redemande).
. Un bloc "Information" INFO qui comporte les bits d'information proprement dits. Conformément à la caractéristique essentielle de l'invention, le nombre de bits utiles dans ce bloc INFO va dépendre du retard qu'aura pris l'émetteur en raison des retransmissions successives.

Pour donner un exemple numérique apte à fixer les idées, le bloc COM contient 48 bits et le bloc INFO 512. Ces deux blocs étant codés par un code convolutif de taux 1/2 et de longueur de contrainte 35, ils deviennent après codage un ensemble de :

2.(48 + 512 + 35) = 1190 bits

De manière plus précise, la structure du bloc COM avant codage est la suivante :

| FANION | ACK | C | N(S) | N(R) | FCS |
|--------|-----|---|------|------|-----|

Ce bloc COM comporte donc :

. Une séquence de synchronisation (facultative), appelée FANION, qui est en quelque sorte le mot de verrouillage de trame des blocs COM. Ce FANION est par exemple constitué par les 8 bits suivants :

0 1 1 1 1 1 1 0

. Un bit ACK qui est l'accusé de réception du dernier bloc reçu. Un bloc est considéré comme bien reçu si le décodage de l'ensemble COM + INFO de ce dernier bloc est jugé fiable (dans notre exemple de codage : si la pile n'a pas débordé), et très préférentiellement si en outre le bloc COM de ce bloc peut être lui-même considéré comme avoir été correctement reçu.

Par exemple, si ACK vaut 1, cela signifie que le dernier bloc reçu l'a été correctement, et qu'il était donc bien le bloc attendu par l'autre correspondant. Le bloc maintenant attendu est alors N(R) . La stratégie utilisée ici étant avantageusement la stratégie classique dite "Go-Back-N ARQ" (les paquets de symboles sont émis de façon continue, mais les réponses du récepteur arrivent après un certain délai égal au temps que met l'émetteur à envoyer N-1 autres paquets : si une demande de retransmission, correspondant à une erreur dans un paquet, est reçue par l'émetteur, ce dernier renvoie le paquet erroné et tous les suivants), cela signifie que tous les blocs antérieurs à N(R) ont été correctement reçus par cet autre correspondant. Cette stratégie de retransmission est utilisée dans le système décrit dans le document EP-A-0 046 831.

Si ACK vaut O, il signifie une mauvaise réception ou un mauvais décodage, et donc la demande de retransmission des blocs à partir de N(R).

. Un ou plusieurs bits C (un seul bit dans notre exemple particulier) indiquant combien de bits du bloc INFO de la trame doivent être considérés comme bits d'information utiles : dans notre exemple 256 (pas de retard excessif, donc un seul bloc d'informations utiles dans la trame) ou 512 (retard excessif, donc deux blocs d'informations utiles dans la trame). Par exemple, l'émetteur de cet autre correspondant va juger qu'il est excessivement en retard lorsque le numéro du bloc N(S) qu'il émet dans cette trame est inférieur de plus de r = 4 (r : nombre entier d'une façon plus générale) au numéro du bloc qu'il aurait émis s'il n'y avait jamais eu de demande de retransmission. Si C vaut zéro, l'émetteur n'est pas en retard excessif, et le débit est normal : dans notre exemple 256 bits utiles et 256 bits de bourrage. Si C vaut 1, l'émetteur est excessivement en retard (r supérieur ou égal à 4) et, pour rattraper ce retard, il émet les bits utiles au rythme de 512 par bloc INFO : le bit C sert alors à indiquer au récepteur qu'il doit prendre en compte les 512 bits du bloc INFO et non plus seulement les 256 premiers.

. Les (par exemple) 11 bits N(S) suivant servent à numéroter (modulo 2048) le premier (ou le seul) bloc d'informations utiles de la trame émise.

. Les (par exemple) 11 bits suivants N(R) indiquent le numéro (modulo 2048) du bloc d'informations utiles que l'on attend de la part du correspondant : il s'agit soit du premier bloc à retransmettre (si ACK vaut 0), soit du premier bloc à émettre normalement (si ACK vaut 1).

. Les (par exemple) 16 bits suivants FCS, qui ne sont pas obligatoires mais fortement recommandés, sont des bits de redondance qui constituent un codage détecteur d'erreurs (ou même, encore plus avantageusement, à la fois détecteur et correcteur d'erreurs) du bloc COM lui-même.

Les blocs de 1190 bits précités, qui sont les bits codés entre les MVT, entrent donc en 1 dans le décodeur séquentiel 2. L'information de confiance qui en sort en 3 est appliquée en 4 à un microprocesseur de gestion 5, tandis que sur les sorties décodées 6 et 7 de ce décodeur 2 apparaissent respectivement les 48 bits du bloc COM décodé et les 512 Dits du bloc INFO décodé.

Un composant interface très pratique et bon marché est le composant dit "HDLC". Il s'agit d'un composant électronique largement disponible dans le commerce et qui, si on lui applique une trame numérique d'un certain format particulier sur son unique entrée, sort directement, sur chacune de ses sorties multiples, divers composants de cette trame, dont en particulier une indication de fiabilité.

4

Pour mémoire, il est rappelé ici le format d'un bloc d'une trame HDLC :

| FANION | ADRESSE | GESTION | INFO-COM | FCS |
|--------|---------|---------|----------|-----|

Dans le protocole HDLC, le "Fanion" (8 bits) est, rappelons-le, le mot de verrouillage de trame de la trame HDLC. Le champ "Adresse" (8 bits) sert a indiquer le destinataire des informations du champ "Info-Com" (8 bits). Le champ "Gestion" (8 bits) a pour but la gestion de la trame HDLC. Le mot FCS (16 bits) est le codage détecteur (ou correcteur) d'erreurs.

Dans le but de pouvoir utiliser un composant HDLC 8, si pratique et peu onéreux, les 24 bits des champs "Adresse", "Gestion", et "Info-Com" de la trame classique HDLC sont utilisés comme suit dans le bloc COM précité sortant en 6 :

. ACK est le premier bit du champ "Adresse"

. C est le deuxième bit du champ "Adresse"

. N(S) est constitué par les six derniers bits du champ "Adresse" suivis des cinq premiers bits du champ "Gestion".

. N(R) est constitué par les trois derniers bits du champ "Gestion" suivis des huit bits du champ "Info-Com".

Si C comportait plus d'un bit, N(S) et N(R) devraient comporter un nombre de bits réduits en conséquence.

Ainsi donc, les 48 bits du bloc COM qui sortent en 6 sont envoyés sur l'entrée 9 d'un boîtier interface HDLC 8, et ce dernier sort respectivement sur ses trois sorties 10, 11, 12 :

. le mot ACK en 10 ;

. l'ensemble C, N(S), N(R), en 11 ;

. et l'information "FCS conforme" en 12, qui indique si le bloc COM a la bonne constitution.

Pour le boîtier HDLC 8, tout se passe en effet comme s'il recevait une trame HDLC continue puisqu'il reçoit une succession de blocs COM commençant tous par le Fanion, qui est son propre mot de verrouillage de trame.

Ces informations de commande, issues en 10, 11, 12 du composant HDLC 8, sont appliquées aux entrées 13, 14, 15 du microprocesseur 5, qui les gère conformément à un protocole "Go-Back-N ARQ", qui peut être un protocole ARQ en soi très classique, adapté aux possibilités de double débit ou plus conformes à l'invention, mais qui dans notre exemple, présente quelques particularités avantageuses qui seront exposées ci-après.

Les blocs INFO de 512 bits qui sortent en 7 du décodeur 2 sont appliqués en 16 à une mémoire-tampon 17, qui reçoit en 18, et en provenance du microprocesseur de gestion 5, un signal d'extraction des blocs de 256 bits utiles, sortant en 19 et constituant l'information reçue.

Le signal de commande en 18 n'est émis par le microprocesseur 5 que s'il a reçu en 4 un signal de confiance positif du décodage séquentiel et s'il a reçu en 15 un signal de conformité du FCS indiquant que le bloc COM est correctement reçu. Par ailleurs, ce signal de commande vient chercher dans la mémoire 17 les blocs d'information vraiment utiles, en laissant de côté les bits de bourrage éventuels.

La liaison étant "duplex", c'est à dire bidirectionnelle, le train à émettre par le correspondant en question arrive en 20 pour être stocké dans une mémoire tampon 21. En fonction des informations contenues dans le bloc COM qu'il a reçu de l'autre correspondant, le microprocesseur 5 vient chercher, dans cette mémoire 21, par la liaison 22, l'information qui doit être émise (ou réémise), en y ajoutant bien entendu le nouveau bloc COM qu'il a élaboré conformément à son protocole ARQ, et qui est destiné à l'autre correspondant.

Les trames correspondantes sont alors appliquées en 23 au codeur correcteur d'erreurs 24 de l'installation ici représentée, qui code classiquement leurs blocs COM et leurs blocs INFO, et les informations numériques à émettre sortent en 25 avec leur MVT vers la partie radioélectrique de l'émetteur.

Le protocole de demande de retransmission "Go-Back-N ARQ" utilisé ici prend bien entendu en compte la possibilité de double-débit précitée (ou de débit triple, quadruple,..., si C est codé sur 2 bits ou même plus). Il est avantageusement établi selon les trois règles essentielles suivantes :

1°) Si le décodage est jugé non fiable et/ou si le bloc Commande contient une ou des erreurs, la retransmission est demandée.

2°) Lorsque l'émetteur est excessivement en retard (r supérieur ou égal à une valeur donnée), il émet des bits utiles d'informations sur toute la capacité du bloc INFO, soit n blocs utiles par bloc INFO (dans

5

notre exemple, il émet 512 bits utiles, soit 2 blocs utiles), et il incrémente en conséquence le numéro N-(S) du premier bloc émis le coup suivant de n (2 dans notre exemple).

3°) Lorsque le récepteur reçoit une demande de retransmission, il ne la prend pas en compte si le bloc demandé a été envoyé moins de N coups auparavant, ou, bien entendu, moins de N/n derniers coups si les envois ont été effectués à n blocs utiles par bloc Information. Quand le récepteur rédemande plusieurs fois successives, jusqu'à N fois, le même bloc, on ne prend en compte que la première redemande. Cette règle a pour but d'éviter de renvoyer un bloc avant d'être sûr que le récepteur a mal reçu le précédent envoi de ce bloc.

L'invention permet d'avoir sur les deux voies d'une communication duplex des taux d'erreur binaire TEB arbitrairement petits, à condition que la liaison ait une qualité (mesurée par le rapport signal à bruit moyen par exemple) supérieure à une qualité critique donnée. Cette qualité critique est toujours nettement supérieure à celle nécessitée par d'autres systèmes classiques pour les mêmes performances. La taille des blocs INFO précités est fixée par les besoins de l'utilisateur.

Dans la pratique, la mémoire-tampon 21 de l'émetteur est finie et il faut prévoir le cas où celle-ci risque d'être saturée. La mémoire-tampon de l'émetteur sert à stocker les derniers blocs qui lui ont été donné à envoyer, et il peut recevoir une demande de retransmission d'un bloc qui lui a été "confié" longtemps avant.

On a vu, avec les valeurs numériques données en exemple, que les blocs étaient numérotés modulo 2048. Les blocs contenant 256 bits utiles, cela correspond à deux blocs ayant même numéro toutes les 500 ms si le débit est de 1 Mbit/s (c'est l'ordre de grandeur du plus grand retard de transmission tolérable en téléphonie).

On considère que l'émetteur dispose de mémoire pour stocker 2048 blocs. Il s'agit des 2048 derniers blocs qui sont arrivés à l'émetteur. Ainsi tous les blocs dans la mémoire tampon de l'émetteur ont un numéro modulo 2048 différent. On comprend que si le retard de transmission dépasse 2048 blocs, les blocs les plus anciens seront perdus et "écrasés" par les nouveaux blocs arrivés.

On a vu que pour éviter une accumulation, due aux retransmissions, de blocs dans les mémoires-tampon des émetteurs, les blocs sont émis deux par deux lorsque l'émetteur est en retard par rapport à un canal non bruité. Il faut dans le cas où l'émetteur n'est pas en retard (si le retard a été rattrapé ou si il n'y a eu aucune retransmission) que les blocs soient émis à la moitié du débit maximal. Par exemple, on peut supposer que des blocs de 256 bits sont émis accompagnés de 256 bits de bourrage lorsqu'il n'y a pas de retard, alors que deux blocs de 256 bits sont émis en cas de retard. On peut cependant utiliser ces 256 bits de bourrage pour transporter de l'information, en codant par exemple les 256 bits utiles en 512 bits. On pourra ainsi réduire le nombre de cas ou le décodage de l'ensemble des blocs COM et INFO sera jugé non fiable, en prévoyant, pour remplacer ces 256 bits de bourrage, 256 bits de codage de correction d'erreurs.

Utilisé avec un code convolutif de très grande longueur de contrainte de taux 1/2 et un décodeur séquentiel travaillant en décision souple, ce système permet une transmission de très haute qualité (TEB < $10^{-10}$ sur le canal troposphérique pour un rapport signal sur bruit moyen de 3 dB en diversité 2 et 1 dB en diversité 3). Le retard de transmission dans ce cas ne dépasse pas 400 ms pour un débit de 1 Mbit/s.

D'une manière générale, la qualité de la transmission, mesurée par son TEB, peut être choisie arbitrairement en choisissant en conséquence le taux et la longueur de contrainte du code convolutif utilisé.

Comme il va de soi, l'invention n'est pas limitée à l'exemple de réalisation qui vient d'être décrit, mais est bien au contraire susceptible d'être mise en oeuvre de multiples autres façons. C'est ainsi par exemple qu'il pourrait s'agir d'une liaison unidirectionnelle, et non pas d'une liaison duplex. Dans un tel cas, la trame normalement émise par l'émetteur vers le récepteur ne comporterait pas le mot N(R) ni le mot ACK, et la trame réémise par le récepteur vers l'émetteur ne comporterait pas le mot N(S), sauf toutefois si ce dernier mot est avantageusement remplacé par un codage correcteur d'erreurs (pouvant être alors très performant) de cette trame réémise. L'utilisation d'un composant HDLC n'est pas obligatoire, le microprocesseur 5 pouvant traiter directement le bloc COM sortant en 6. Le codage séquentiel avec algorithme de pile n'est pas obligatoire non plus, et l'on pourrait aussi bien utiliser tout autre type de codage, même non convolutif, l'essentiel étant que l'on soit à même d'obtenir, quel que soit le moyen utilisé dans ce but, une indication de fiabilité du décodage, ou "indication de confiance", ce qui ne pose en général pas de problème particulier pour l'homme de l'art.

**Revendications**

1. Procédé de transmission numérique d'informations, avec demande automatique de retransmission, ou "ARQ", et codage détecteur ou correcteur d'erreur des blocs émis, avec émission d'une indication de fiabilité du décodage, ou "indication de confiance" (3), la valeur de cette indication permettant de juger si le décodage est efficace ou non efficace, dans ce dernier cas une demande de retransmission ARQ ayant alors lieu, caractérisé en ce qu'il consiste à prévoir, dans chaque trame à émettre, un emplacement supplémentaire suffisant pour, en cas de retard de valeur prédéterminée (r) jugée excessive, dû aux retransmissions, procéder, pour résorber ce retard excessif, à l'émission simultanée de plusieurs (n) blocs d'informations, au lieu d'un seul en cas de retard non excessif, dans cette même trame, cette dernière trame comportant de ce fait, avant codage, au moins :

. le classique mot de verrouillage de trame (MVT) ;

. un bloc Commande (COM) qui comporte les renseignements nécessaires au protocole de retransmission, parmi lesquels figure une indication (C) qui précise le nombre (n) de blocs d'informations utiles alors émis simultanément dans cette trame : un seul bloc en cas de retard (r) nul ou non excessif, deux blocs ou plus (n) en cas de retard (r) jugé excessif ;

. un bloc Information (INFO) qui comporte entre autres les bits utiles d'information proprement dits, et dont la taille est suffisante pour contenir, en cas de retard (r) jugé excessif, deux ou plus (n) blocs d'informations utiles successifs qui seraient, en cas contraire, émis chacun dans le bloc Information (INFO) d'une trame respective.

2. Procédé ARQ selon la revendication 1, caractérisé en ce que le bloc Commande (COM) comporte lui-même un codage (FCS) détecteur ou correcteur d'erreurs apte à fournir, à la réception, une indication (12) de conformité de ce bloc Commande (COM).

3. Procédé selon la revendication 1 ou la revendication 2, caractérisé en ce qu'il consiste en outre, lorsqu'aucun retard n'est à rattraper et qu'alors un seul bloc d'informations utiles est émis par trame, à remplir la partie restante du bloc Information (INFO) non pas avec des bits de bourrage, mais avec des bits de codage de correction d'erreurs.

4. Procédé ARQ selon l'une des revendications 1 à 3, caractérisé en ce que le codage utilisé pour la trame émise est un code convolutif dont le taux et la longueur de contrainte sont choisis en fonction de la qualité de la liaison (TEB) désirée.

5. Procédé ARQ selon la revendication 4, caractérisée en ce que le décodage est décodage séquentiel utilisant l'algorithme de pile.

6. Procédé ARQ selon l'une des revendications 1 à 5, caractérisé en ce que, dans le but d'utiliser à la réception un composant HDLC (8), les 24 bits des champs "Adresse", "Gestion", et "Info-Com" de la trame classique HDLC sont utilisés comme suit dans le bloc Commande (COM) de la trame émise :

. le premier bit du champ "Adresse" est l'accusé de réception (ACK) du dernier bloc d'informations utiles reçu ;

. les bits restants de ce champ "Adresse" et les bits des champs "Gestion" et "Info-Com" sont utilisés pour indiquer combien (C) de blocs d'informations utiles sont effectivement émis dans la trame, quel est éventuellement le numéro [N(S)] du premier (ou du seul) bloc d'information utiles qu'on émet dans cette trame, et quel est éventuellement le numéro [N(R)] du bloc d'informations utiles qu'on attend du correspondant.

7. Procédé ARQ selon l'une des revendication 1 à 6, caractérisé en ce qu'il utilise un protocole de demande de retransmission du type "Go-Back-N ARQ" - selon lequel les paquets de symboles sont émis de façon continue, mais les réponses du récepteur arrivent après un certain délai égal au temps que met l'émetteur à envoyer (N-1) autres paquets - qui est établi selon les trois règles suivantes :

1°) si le décodage est jugé non-fiable et/ou si le bloc Commande (COM) contient une ou des erreurs, la retransmission est demandée ;

2°) lorsque le retard (r) de l'émetteur est excessif, ce dernier émet des bits utiles d'informations sur toute la capacité du bloc Information (INFO), soit n blocs utiles par bloc Informations, et il incrémente en conséquence le numéro [N(S)] du premier bloc émis le coup suivant de n ;

3°) lorsque le récepteur reçoit une demande de retransmission, il ne la prend pas en compte si le bloc redemandé a été envoyé moins de n coups auparavant (ou moins de N/n derniers coups si les envois ont été effectués à n blocs utiles par bloc Information) ; lorsque le récepteur redemande plusieurs fois successives, jusqu'à N fois, le même bloc, on ne prend en compte que la première redemande.

8. Dispositif de mise en oeuvre du procédé de transmission numérique avec demande automatique de retransmission ARQ, et codage détecteur ou correcteur des blocs émis, avec émission d'une indication de fiabilité du décodage, ou "indication de confiance" (3), la valeur de cette indication permettant de juger si le décodage est efficace ou non efficace, dans ce dernier cas une demande de retransmission ARQ ayant alors lieu, selon la revendication 6 ou la revendication 7 caractérisé en ce qu'il comporte au moins, pour chaque correspondant :

- un dispositif (2) de décodage de détection ou correction d'erreurs du signal reçu (1), avec sortie (3) de signal d'indication de fiabilité de ce décodage, sortie (6) du bloc Commande (COM) décodé, et sortie (7) du bloc Information (INFO) décodé ;
- un microprocesseur de gestion (5) avec des entrées (13,14,15) pour recevoir les renseignements contenus dans le bloc Commande (COM) et une entrée pour recevoir la signal d'indication de fiabilité du décodage, à partir desquelles le microprocesseur (5) émet des signaux de gestion (18,22) sur ses sorties;
- un composant HDLC (8) recevant sur son entrée (9) ce bloc Commande (COM) décodé et dont les sorties (10, 11, 12) sont appliquées aux entrées (13,14,15, respectivement) du microprocesseur de gestion (5);
- une mémoire-tampon (17) qui emmagasine ces blocs Information (INFO) décodés reçus et de laquelle est extrait, sous commande (18) du microprocesseur (5), le train utile reçu (19) ; et
- une autre mémoire-tampon (21) qui emmagasine les trains (20, 22) à émettre sous commande (22) du microprocesseur (5), et qui comporte une sortie (23) d'émission de ces trains.

**Claims**

1. A method of transmitting digital data with automatic repeat requests (ARQ), and with error detecting or correcting encoding being used on the transmitted blocks, and with a "confidence flag" (3) being provided representative of the reliability of decoding, the value of this flag making it possible to determine whether the decoding is effective or ineffective, with an ARQ repeat request taking place if the decoding is ineffective, the method being characterized in that it consists in providing an additional location in each frame to be transmitted, said additional location being large enough for it to be possible, in the event of delay reaching a predetermined value ($\underline{r}$) judged to be excessive and due to repeat transmissions, to absorb this excessive delay by transmitting a plurality ($\underline{n}$) of information blocks simultaneously in a single frame instead of transmitting only one at a time as when the delay is not excessive, such a frame comprising a plurality of information blocks thus comprising, prior to encoding, at least:

   a conventional frame locking word (MVT);

   a command block (COM) which includes the information required by the repeat transmission protocol, which information includes a mention (C) of the number ($\underline{n}$) of useful information blocks being transmitted simultaneously in the frame, namely a single block when the delay ($\underline{r}$) is zero or not excessive, and two or more blocks ($\underline{n}$) when the delay ($\underline{r}$) is judged to be excessive; and

   an information block (INFO) which includes, $\underline{inter\ alia}$, useful information bits $\underline{per\ se}$, with the size of the information block being sufficient, in the event of a delay ($\underline{r}$) judged to be excessive, to contain two or more ($\underline{n}$) successive blocks of useful information, each of which would otherwise have been transmitted in the information block (INFO) of a respective frame.

2. An ARQ method according to claim 1, characterized in that the command block (COM) itself includes error detecting or correcting encoding (FCS) suitable for providing an indication (12) on reception concerning the validity of the command block (COM).

3. A method according to claim 1 or claim 2, characterized in that it further consists, when there is no lateness to be caught up and so only one block of useful information is to be transmitted per frame, in filling the remaining portion of the information block (INFO) not with padding bits but with error correcting code bits.

4. An ARQ method according to any one of claims 1 to 3, characterized in that the coding used for the frame as transmitted is a convolution code having a code ratio and a constraint length which are selected as a function of the quality (TEB) of the intended link.

5. An ARQ method according to claim 4, characterized in that the decoding is sequential decoding using the stack algorithm.

6. An ARQ method according to any one of claims 1 to 5, characterized in that in order to make use of an HDLC component (8) at the receiver, the 24 bits of the ADDRESS, CONTROL, and INFO-COM fields of a conventional HDLC frame are made use of as follows for the command block (COM) of the transmitted frame;

the first bit of the ADDRESS field is the acknowledge bit (ACK) for the last received block of useful information; and

the remaining bits of the ADDRESS field and the bits of the CONTROL and INFO-COM fields are used for indicating how many (C) useful information blocks are actually transmitted in the frame, the number (N(S)) of the first (or only) useful information block transmitted in the frame, and the number (N(R)) of the useful information block expected from the other party, where said numbers (N(S), N(R)) are optional.

7. An ARQ method according to any one of claims 1 to 6, characterized in that it uses a Go-Back-N ARQ type protocol in which packets of symbols are transmitted continuously but replies from the receiver arrive after a certain time interval equal to the time in which the transmitter sends N-1 other packets, which protocol is established using the following three rules:

1) if the decoding is judged to be unreliable and/or if the command block (COM) contains one or more errors, then a repeat is requested;

2) when the lateness ($\underline{r}$) of the transmitter is excessive, the transmitter transmits useful information bits over the entire capacity of the information block (INFO), i.e. $\underline{n}$ useful blocks per information block, and the number (N(S)) of the first block transmitted on the next occasion is consequently incremented by $\underline{n}$; and

3) when the receiver receives a repeat request, it ignores it if the requested block has been transmitted within the last $\underline{n}$ turns (or within the N/n last turns if transmission is taking place at $\underline{n}$ useful blocks per information block); when the receiver requests the same block on a plurality of successive occasions, up to a total of N successive occasions, only the first request is taken into account.

8. Apparatus for implementing the ARQ method of digital transmission with automatic repeat request, and detecting or correcting encoding being used on the transmitted blocks, and with a "confidence flag" (3) being provided representative of the reliability of decoding, the value of this flag making it possible to determine whether the decoding is effective or ineffective, with an ARQ repeat request taking place if the decoding is ineffective, according to claim 6 or claim 7, characterized in that it comprises, for each party, at least:

a circuit (2) for decoding and detecting or correcting errors in the received signal (1) and having an output (3) for a decoding reliable flag, an output (6) for the decoded command block (COM), and an output (7) for the decoded information block (INFO);

a controlling microprocessor (5) with inputs (13, 14, 15) for receiving the information contained in the command block (COM) and an input for receiving the decoding reliable flag signal, from which the microprocessor (5) emits control signals (18, 22) on its outputs;

an HDLC component (8) receiving said decoded command block (COM) on its input (9) and having its outputs (10, 11, 12) applied to the inputs (13, 14, 15, respectively) of the controlling microprocessor (5);

a buffer memory (17) for storing received and decoded information blocks (INFO) from which the received useful data train (19) is extracted under control (18) of the microprocessor (5); and

another buffer memory (21) which stores data trains (20, 22) for transmitting under the control of the microprocessor (5) and which includes an output (23) over which said trains are transmitted.

**Patentansprüche**

1. Verfahren zur digitalen Informationsübertragung mit automatischer Sendewiederholung oder ARQ und mit einer Fehler erkennenden oder Fehler korrigierenden Kodierung der ausgesandten Blöcke, wobei eine Angabe über die Dekodierzuverlässigkeit oder "Vertrauensangabe" (3) ausgesandt wird und der Wert dieser Angabe ein Urteil drüber erlaubt, ob die Dekodierung wirksam oder nicht wirksam ist, worauf im letzteren Fall eine erneute Aussendung ARQ gewünscht wird, dadurch gekennzeichnet, daß das Verfahren darin besteht, in jedem auszusendenden Rahmen eine zusätzliche Stelle vorzusehen, die ausreicht, um im Fall eines bestimmten als untragbar betrachteten Rückstaus aufgrund der Sendewiederholungen in Hinblick auf einen Abbau dieses übermäßigen Rückstaus auf der Sendeseite gleichzeitig mehrere (n) Informationsblöcke anstelle eines einzigen im Fall eines nicht störenden Rückstaus in diesem gemeinsamen Rahmen auszusenden, und daß dieser letztere Rahmen daher vor der Kodierung mindestens enthält:

. das übliche Rahmenverriegelungswort (MVT),

. einen Steuerblock (COM), der die für das Sendewiederholungsprotokoll notwendigen Informationen enthält, zu denen einen Angabe (C) gehört, die die Anzahl (n) der gleichzeitig in diesem Rahmen ausgesandten Nutzinformationsblöcke angibt, nämlich einen einzigen Block im Fall eines nicht vorhandenen oder nicht erheblichen Rückstaus (r), zwei oder mehr Blöcke (n) im Fall eines als untragbar empfundenen Rückstaus (r),

. einen Informationsblock (INFO), der unter anderem die eigentlichen Nutzinformationsbits enthält und dessen Größe ausreicht, um im Fall eines als untragbar betrachteten Rückstaus (r) zwei oder mehr (n) aufeinanderfolgende Nutzinformationsblöcke zu enthalten, die im anderen Fall je im Informationsblock (INFO) eines eigenen Rahmens ausgesandt würden.

2. ARQ-Verfahren nach Anspruch 1, dadurch gekennzeichnet, daß der Steuerblock (COM) seinerseits eine Fehler erkennende oder Fehler korrigierende Kodierung (FCS) enthält, die geeignet ist, beim Empfang eine Angabe zu liefern, ob dieser Steuerblock (COM) regelgerecht ist.

3. ARQ-Verfahren nach Anspruch 1 oder 2, dadurch gekennzeichnet, daß außerdem, wenn kein Rückstau aufzuholen ist und daher nur ein Nutzinformationsblock in jedem Rahmen ausgesandt wird, der verbleibende Teil des Informationsblocks (INFO) nicht mit Füllbits, sondern mit Bits einer Fehler korrigierenden Kodierung gefüllt wird.

4. ARQ-Verfahren nach einem der Ansprüche 1 bis 3, dadurch gekennzeichnet, daß die für den ausgesandten Rahmen verwendete Kodierung ein konvolutiver Kode ist, dessen Kodiergrad und Zwangslänge abhängig von der gewünschten Qualität der Verbindung (TEB) gewählt werden.

5. ARQ-Verfahren nach Anspruch 4, dadurch gekennzeichnet, daß die Kodierung eine sequentielle Dekodierung ist, die einen Stapelalgorithmus verwendet.

6. ARQ-Verfahren nach einem der Ansprüche 1 bis 5, dadurch gekennzeichnet, daß in Hinblick auf die Verwendung eines HDLC-Bauteils (8) auf der Empfangsseite die 24 Bits der Adressen-, Verwaltungs- und INFO-COM-Felder des üblichen HDLC-Rahmens wie folgt im Steuerblock (COM) des Senderahmens verwendet werden:

. das erste Bit des Adressenfelds ist die Empfangsbestätigung (ACK) des letzten empfangenen Nutzinformationsblocks,

. die übrigen Bits dieses Adressenfelds und die Bits des Verwaltungsfelds und des INFO-COM-Felds werden verwendet, um anzugeben, wieviele (C) Nutzinformationsblöcke tatsächlich in dem Rahmen übertragen werden, welches ggf. die Nummer (N(S)) des ersten (oder einzigen) Nutzinformationsblocks ist, der in diesem Rahmen übertragen wird und welche Nummer (N(R)) des Nutzinformationsblocks vom Teilnehmer ggf. erwartet wird.

7. ARQ-Verfahren nach einem der Ansprüche 1 bis 6, dadurch gekennzeichnet, daß man ein Protokoll für den Sende-Wiederholungswunsch vom Typ "Go-Back-N ARQ" verwendet, gemäß dem die Pakete von Symbolen kontinuierlich ausgesandt werden, die Antworten vom Empfänger nach einer gewissen Verzögerung eintreffen, die der Zeit entspricht, die der Sender zum Aussenden von N-1 weiteren Paketen benötigt, und daß dieses Protokoll gemäß den drei folgenden Regeln erstellt ist:

1°) wenn die Dekodierung als unzuverlässig angesehen wird oder wenn der Steuerblock (COM) mindestens einen Fehler enthält, dann wird die Sendewiederholung beantragt,

2°) wenn der Rückstau (r) des Senders untragbar wird, dann sendet dieser die Nutzinformationsbits in der ganzen Kapazität des Informationsblocks (INFO), also n Nutzblöcke je Informationsblock und zählt zugleich die Nummer (N(S)) des ersten im nächsten Zyklus auszusendenden Blocks um n weiter,

3°) wenn der Empfänger einen Sende-Wiederholungswunsch empfängt, läßt er ihn unberücksichtigt, wenn der erneut zu sendende Block weniger als n Zyklen vorher (oder weniger als N/n Zyklen vorher, wenn die Aussendungen mit n Nutzblöcken je Informationsblock erfolgt sind), wobei man, wenn der Empfänger mehrere Male hintereinander (bis zu N mal) denselben Block anfordert, nur den ersten Wiederholungswunsch berücksichtigt.

8. Vorrichtung zur Durchführung des Verfahrens zur digitalen Übertragung mit automatischem Sende-Wiederholungswunsch ARQ und mit einer Fehler erkennenden oder Fehler korrigierenden Kodierung für die ausgesandten Blöcke sowie mit Aussendung einer Angabe über die Zuverlässigkeit der Dekodierung oder Vertrauensangabe (3), deren Wert ein Urteil darüber erlaubt, ob die Dekodierung wirksam oder nicht wirksam ist, worauf im letzteren Fall eine Sende-Wiederholung ARQ gewünscht wird, gemäß Anspruch 6 oder Anspruch 7, dadurch gekennzeichnet, daß sie für jeden Teilnehmer mindestens aufweist:

- eine Fehler erkennende oder Fehler korrigierende Dekodiervorrichtung (2) für das Empfangssignal (1), die einen Ausgang (3) für ein die Zuverlässigkeit der Dekodierung anzeigendes Signal, einen Ausgang (6) für den dekodierten Steuerblock (COM) und einen Ausgang (7) für den dekodierten Informationsblock (INFO) besitzt,
- einen Verwaltungs-Mikroprozessor (5) mit Eingängen (13, 14, 15), um die im Steuerblock (COM) enthaltenen Informationen zu empfangen, und mit einem Eingang, um das Signal betreffend die Dekodierzuverlässigkeit zu empfangen, aus denen der Mikroprozessor (5) an seinen Ausgängen Verwaltungssignale (18, 22) bildet,
- ein HDLC-Bauteil (8), das an seinem Eingang (9) diesen dekodierten Steuerblock (COM) empfängt und dessen Ausgänge (10, 11, 12) an die Eingänge (13 bzw. 14 bzw. 15) des Verwaltungs-Mikroprozessors (5) angeschlossen sind,
- einen Pufferspeicher (17), der diese empfangenen und dekodierten Informationsblöcke (INFO) speichert und aus dem unter Steuerung (18) durch den Mikroprozessor (5) der empfangene Nutzdatenzug (19) entnommen wird,
- und einen weiteren Pufferspeicher (21), der die unter der Steuerung (22) durch den Mikroprozessor (5) auszusendenden Datenzüge (20, 22) speichert und einen Ausgang (23) zur Aussendung dieser Datenzüge enthält.